# EUROPEAN PATENT APPLICATION

(11) **EP 4 708 094 A1**
(43) Date of publication of application: **11.03.2026**
(21) Application number: 24199565.3
(22) Date of filing: 10.09.2024
(51) Int. Cl.: G06F 21/55, H04L 9/40, H04W 12/12, G06N 3/02, G06N 3/04, G06N 3/08

(54) **COMPUTER-IMPLEMENTED METHOD FOR ASSESSING A LEVEL OF CYBER SECURITY RISKS OF AN ELECTRONIC CONTROL UNIT**

(71) Applicant: Argus Cyber Security Ltd, 6789155 Tel Aviv (IL)
(72) Inventor: Bari-Ephraim, Yael, 6789155 Tel Aviv (IL); Lavi, Oron, 6789155 Tel Aviv (IL)
(74) Representative: Aumovio Corporation

(57) **Abstract**

The invention provides a computer-implemented method for assessing a level of cyber security risks of an electronic control unit (10), the electronic control unit (10) including a plurality of components (12) for generating, storing, and/or processing data.

## Description

### TECHNICAL FIELD

The invention relates to a computer-implemented method for assessing a level of cyber security risks of an electronic control unit. The invention further relates to a computing device, a computer program, a computer-readable storage medium, and an electronic control unit.

### BACKGROUND

Threat analysis risk assessment (TARA) as proposed in ISO/SAE 21434 is a complex activity that should take place in the development of most automotive ECUs. However, TARA is not specific to automotive. The purpose of TARA is to identify potential security risks and to decide which and how to mitigate. In TARA, one might decide to accept or to ignore a risk if it is not significant, or to introduce a security measure to reduce another. This activity requires high expertise and experience in cyber security, but it is also repetitive and time consuming.

### SUMMARY OF THE INVENTION

The object of the invention is to provide an improved method to assess a level of cyber security risks of an electronic control unit.

To achieve this objective, the invention provides a computer-implemented method for assessing a level of cyber security risks of an electronic control unit according to claim 1. A computing device, a computer program, a computer-readable storage medium, and an electronic control unit are subject-matter of the parallel claims. Advantageous embodiments of the invention are subject-matter of the dependent claims.

In one aspect, the invention provides a computer-implemented method for assessing a level of cyber security risks of an electronic control unit (ECU), the electronic control unit including a plurality of components for generating, storing, and/or processing data, the method comprising:
a) Automatically determining, for the electronic control unit, all of the plurality of components that are vulnerable, each vulnerable component being vulnerable to one or more corresponding potential threats, and obtaining each communication link for data communication between said vulnerable components based on an architecture model of the electronic control unit;
b) Determining, for the electronic unit, the one or more corresponding potential threats for each vulnerable component, one or more potential (threat-related) damages to each vulnerable component and corresponding impact ratings therefor, and one or more potential (threat-related) attack paths to each vulnerable component and corresponding attack path feasibilities therefor;
c) Based on step b), for each potential threat and each potential (threat-related) attack path, determining a corresponding risk value based on the impact rating for the potential (threat-related) damage to the respective vulnerable component and the attack path feasibility for the respective potential (threat-related) attack path; and
d) Assessing the level of cyber security risks of the electronic control unit based on the one or more risk values determined in step c).

An advantage of the method may be that it preferably automatically performs one or more steps. The method may thus assess many ECUs in a short period of time, preferably without or with less human effort than other known methods. An ECU may thus be composed by means of the method according to pre-defined requirements. Thus, a probability for human error may be decreased and/or excluded. This increases the safety of the so composed ECU.

Preferably, each component is respectively configured as a hardware and/or software component.

An advantage of the method may be that it preferably includes hardware and software components as well. A hardware component may be any physical device of the ECU. A software component may be an operating system, a firewall, a program, a driver, and so on. Thus, all vulnerable components of the ECU may be considered, preferably without exception. This increases the safety of the ECU.

Preferably, the plurality of components includes an input and/or output interface component of the electronic control unit.

Preferably, each component respectively includes one, several, or all of the following:
- a microcontroller unit;
- a memory device, preferably a non-volatile and/or read-only memory device;
- a sensor device;
- an operating system;
- a device driver;
- a JTAG device;
- an analog-to-digital converter device; and/or
- an integrated and/or regulator circuit device.

Preferably, the architecture model is included in a visual image, a file, and/or a database.

An advantage of the method may be that the architecture model preferably can be extracted from different sources. The method may thus be more flexible and user-friendly.

Preferably, each potential threat is based on one or more potential attacks against one or more vulnerable components.

An advantage of the method may be that it preferably includes potential threats that are based on more than one potential attacks. For example, two potential attacks may be directed to the same component or to different components. This increases the safety of the composed ECU.

Preferably, each potential attack path relates to a direct or an indirect potential threat against the respective vulnerable component.

Preferably, an indirect potential threat relates a second potential attack against the respective vulnerable component in connection with a first potential attack against a vulnerable component in data communication with the respective vulnerable component.

As previously mentioned, the method may include potential threats that are based on more than one potential attacks. For instance, the method preferably includes potential threats that are based on two potential attacks against two components that are in data communication with each other. This increases the safety of the composed ECU.

Preferably, the potential threat against the vulnerable component includes one, several, or all of the following:
- Consuming component-related resources for generating, storing, and/or processing;
- Removing, manipulating, and/or gathering component-related data;
- Intercepting a component-related data flow;
- Spoofing component-related identity; and/or
- Performing a denial-of-service attack.

Preferably, the potential (threat-related) damage to the vulnerable component includes one, several, or all of the following:
- Unavailability of the component or one or more intended functionalities thereof;
- Manipulation of the component;
- Corruption of firmware and/or software of the component; and/or
- Data extraction from the component.

Preferably, the impact rating is indicative of an impact of the potential damage to the respective vulnerable component relating to the potential threat against the respective vulnerable component.

The impact rating may be based on an impact scale including a plurality of impact levels. For example, the impact level may be "negligible", "moderate", "major", or "severe". Any other impact scale may, however, be possible.

Preferably, the impact rating is considered with respect to a safety impact, a financial impact, an operational impact, and/or a privacy impact of the potential (threat-related) damage to the vulnerable component.

Each of the safety impact, financial impact, operational impact, and/or privacy impact may be based on a respective impact scale. The impact rating may be, for example, a conjunction of said respective impact scales.

Preferably, the attack path feasibility is indicative of a feasibility of the potential attack path to the respective vulnerable component relating to the potential threat against the respective vulnerable component.

Preferably, the attack path feasibility is considered with respect to one, several, or all of the following:
- a time,
- a level of expertise of an attacker,
- an amount or field of knowledge and/or information about the electronic control unit,
- a window of opportunity for an attacker, and/or
- an equipment
required for performing the potential (threat-related) attack path.

The attack path feasibility may be based on a feasibility scale including a plurality of feasibility levels. For example, the feasibility level may be "very low", "low", "medium", or "high". Any other feasibility scale may, however, be possible.

Each of the time, level of expertise, knowledge (and/or information), window, and/or equipment may be based on a respective feasibility scale. The attack path feasibility may be, for example, a conjunction of the said respective feasibility scales.

The risk value may be based on a risk scale including a plurality of risk levels. For example, the risk level may be "very low", "low", "medium", "high", or "critical". Any other risk scale may, however, be possible.

Preferably, the risk value is based on a product of a level for the attack path feasibility and a level for the impact rating.

Preferably the risk value is based on a risk score matrix for the attack path feasibility and the impact rating.

For example, the risk score matrix may be a two-dimensional matrix having a plurality of columns and a plurality of rows. For example, the matrix may have four columns representing "very low", "low", "medium", and "high" as possible attack path feasibility and four rows representing "negligible", "moderate", "major", and "severe" as possible impact rating. Each entry of the matrix may represent a possible risk value, for example, in form of a risk level on the risk scale.

Preferably, step b), c), and d) further comprise:
b1) Generating a first list of the potential threats against each vulnerable component;
b2) Generating a second list of the potential (threat-related) damages to each vulnerable component and the corresponding impact ratings therefor;
b3) Generating a third list of the potential (threat-related) attack paths to each vulnerable component and the corresponding attack path feasibilities therefor;
c1) For all potential threats from the first list and all potential (threat-related) attack paths from the third list, generating a fourth list of the risk values based on the impact ratings from the second list for the potential damages relating to the potential threats and the attack path feasibilities for the potential (threat-related) attack paths; and
d1) Assessing the level of cyber security risks of the electronic control unit based on the fourth list of risk values.

One example of an implementation of the method is based on lists, here four lists. However, other forms of implementation, for example, with another number of lists or even without lists, may be possible.

Preferably, step d) further comprises one, several, or all of the following:
d2) Assessing the level of cyber security risks by generating a report on the cyber security of the electronic control unit;
d3) Assessing the level of cyber security risks based on a maximum and/or minimum value of the one or more risk values, and/or a mean value of the one or more risk values, and/or a standard deviation of the one or more risk values;
d4) Assessing the level of cyber security by comparing the one or more risk values to a standardized list of threats that is mandatory to be considered for an automotive electronic control unit; and/or
d5) Assessing the level of cyber security includes providing a treatment decision on each risk value.

Preferably, the method further comprises:
f) Determining potential counter measures based on the assessing, preferably by reducing at least one of the risk values and/or by removing the vulnerability of at least one vulnerable component, wherein said potential counter measures preferably include updating and/or changing the architecture model by one, several, or all of the following:
- Removing, replacing, and/or adapting at least one vulnerable component;
- Removing, changing, and/or adapting at least one communication link between vulnerable components; and/or
- Adding at least one further component and/or communication link.

The method may determine counter measures based on the assessing, if needed. These counter measures may further increase the safety of the composed ECU. However, a counter measure may be that a safety may be lowered for the specifically composed ECU. For example, the assessment of the ECU may conclude that a firewall for a vulnerable component is not needed according to some requirements. Thus, the ECU may be optimally composed according to the method within pre-defined requirements.

Preferably, one, several, or all of the steps of the method are repeated when the architecture model is updated and/or changed.

The architecture model may be updated and/or changed if pre-defined requirements are not met, for example. Thus, the method may automatically determine whether such requirements are met, and if not: update and/or change the architecture model and perform steps a) to d) with the updated and/or changed architecture model. This increases the safety of the composed ECU and decreases computational resources.

Preferably, the repetition includes comparing the assessment of a current architecture model with the assessment of a previous architecture model.

This increases the safety of the composed ECU and decreases computational resources. It may further allow a user to more precisely review and/or validate changes. This may increase a user friendliness of the method and may decrease a probability for human error.

Preferably, the one or more potential threats, the one or more potential (threat-related) damages, the one or more impact ratings, the one or more potential (threat-related) attack paths, the one or more attack path feasibilities, the one or more risk values, and/or one or more potential attacks are mapped to the electronic control unit and/or the vulnerable components thereof based on information about a plurality of architecture models and corresponding assessments and/or reports, and/or are mapped by means of a machine learning model trained with said information.

Preferably, the one or more corresponding potential threats, the one or more potential (threat-related) damages and corresponding impact ratings therefor, the one or more potential (threat-related) attack paths and corresponding attack path feasibilities therefor, and/or one or more potential attacks are automatically selected for or to each vulnerable component, respectively, based on a set of rules that is included in a database.

In another aspect, the invention provides a computing device comprising means adapted to execute the steps of the method according to any of the preceding embodiments.

Any feature, aspect, and/or advantage that is described herein with respect to embodiments of the computing device may optionally apply to embodiments of the method, and vice versa.

In another aspect, the invention provides a computer program comprising instructions to cause a computing device to execute the steps of the method according to any of the preceding embodiments.

Any feature, aspect, and/or advantage that is described herein with respect to embodiments of the computer program may optionally apply to embodiments of the method and/or the computing device, and vice versa.

In another aspect, the invention provides a computer-readable storage medium having stored thereon the computer program.

Any feature, aspect, and/or advantage that is described herein with respect to embodiments of the computer-readable storage medium may optionally apply to embodiments of the method, the computing device, and/or the computer program medium, and vice versa.

In another aspect, the invention provides an electronic control unit, preferably for operating a vehicle and/or an in-vehicle device, the electronic control unit being composable and/or composed with a composition that is determined and/or determinable by means of an assessment of a level of cyber security risks thereof based on the computer-implemented method according to any of the preceding embodiments.

Any feature, aspect, and/or advantage that is described herein with respect to embodiments of the electronic control unit may optionally apply to embodiments of the method, the computing device, the computer program, and/or the computer-readable storage medium, and vice versa.

Embodiments of the invention preferably have the following advantages and effects:
Embodiments of the invention preferably automate the TARA process and help to manage it across the lifetime of an ECU. Existing tools allow to manually create a model and define the risks but may not be able to automate it according to pre-defined set of rules and policies.

Preferred embodiments of the invention include one, several, or all of the following:
- Software running on a server used mostly during development phase of the ECU instead of in-vehicle;
- Automatically identifying the different hardware and software components from which the ECU is composed of, and the different links and interfaces between them, by scanning an image or file describing the ECU architecture;
- Automatically generating a list of threats based on limited, well-defined set of inputs (system architecture, risk policy, system requirements);
- Automatically breaking down and setting rating (evaluating) each threat and its possible damage to the system;
- Automatically regenerating/updating TARA when the input information (e.g., architecture) is updated; and/or
- Automatically tracking and considering input from an expert, such as deciding which assets to include in the analysis, how to treat specific risks etc.

Preferred embodiments of the invention provide a method for automatically creating a report, listing for a target system all potential security threats, possible outcome of each threat, mapping each threat to different steps that might materialize each threat and the feasibility of each step, and an eventual rating for the probability and severity of each threat.

In preferred embodiments of the invention, one, several, or all of the following preferred steps are performed:
- Receiving an artifact that created in one or more of software development process of the ECU software (such as documentation, requirements, architecture model, source code or binary code) is received;
- Generating a list of (software and/or hardware) assets of which the ECU is composed and relations between them;
- For each asset detected in the ECU, automatically generating a list of threats that could result in unwanted operation of the asset or the ECU as a whole. Such unwanted operation could be loss of data, leaked information, unexpected behavior that could result in physical damage to passengers or property or financial loss;

- Generating for each threat the steps or events that would result in each such threat materializing;
- Evaluating and indicating the probability (high, low, ...) of each such step materializing and the severity of the resulting damage;
- Rating the overall risk of each threat taking place and its potential outcome; and/or
- Proposing changes to the system or actions to be taken to reduce such risk.

Preferred embodiments of the invention may further include one, several, or all of the following:
- The generation of assets may happen by identifying the names, properties, and connections of each element in the architecture model;
- The generation of threats, attack paths (the steps to materialize the threats) may happen by using a pre-defined set of rules, that map each asset to possible threats and attack outcomes;
- The generation of threats, attack paths (the steps to materialize the threats) may happen by using an AI (artificial intelligence) trained on a large amounts of TARA documents; and/or
- The generation of proposed mitigations may be created according to a list of possible mitigations each related to assets and threats it could mitigate, and each mitigation may be described as a list of requirements to be implemented.

Preferred embodiments may further use generative AI to ask the user questions and to understand how to improve the TARA scope and suggestions. The evaluation may preferably be performed according to known standards in threat analysis.

### BRIEF DESCRIPTION OF THE DRAWINGS

Embodiments of the invention are now explained in more detail with reference to the accompanying drawings of which
Fig. 1 shows an embodiment of an electronic control unit (ECU);
Fig. 2 shows an embodiment of an architecture model of the ECU;
Fig. 3 shows an embodiment of a computer-implemented method for assessing a level of cyber security risks of the ECU;
Fig. 4 shows an implementation of the method according to Fig. 3 in form of a plurality of lists; and
Fig. 5 shows an example of a risk score matrix.

### DETAILED DESCRIPTION OF THE DRAWINGS

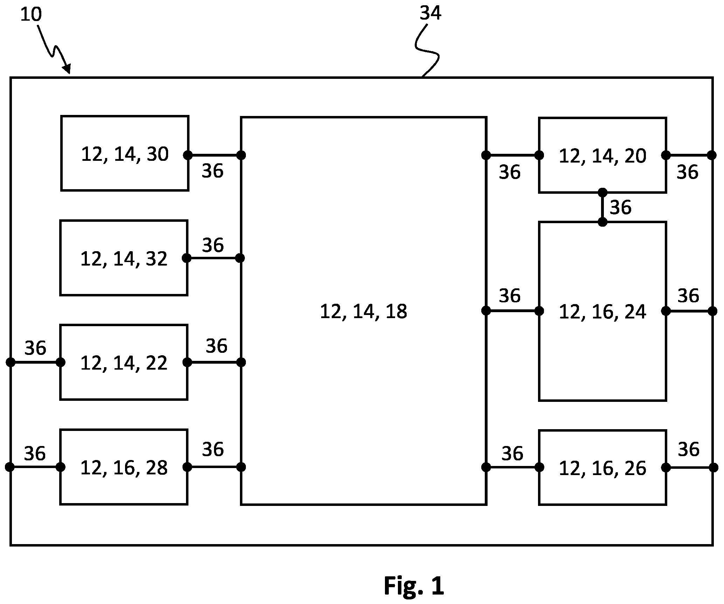

Fig. 1 shows an embodiment of an electronic control unit (ECU) 10. The ECU 10 may be configured, for example, for operating a vehicle and/or an in-vehicle device.

The ECU 10 includes a plurality of components 12. Each component 12 may be a hardware component 14 and/or a software component 16. For example, the component 12 may be configured as a microcontroller unit 18. Additionally, or alternatively, the component 12 may be configured as a memory device 20, preferably a non-volatile and/or a read-only memory device. Additionally, or alternatively, the component 12 may be configured as a sensor device 22, an operating system 24, a device driver 26, a Joint Test Action Group (JTAG) driver 28, an analog-to-digital converter device 30, and/or an integrated and/or regular circuit device 32. Additionally, or alternatively, the component 12 may be configured as an input and/or output interface component 34 of the ECU 10.

The components 12 are configured for generating, storing, and/or processing data, respectively. The components 12 may be pairwise connected via corresponding communication links 36 for data communication. Each communication link 36 may be wired and/or wireless.

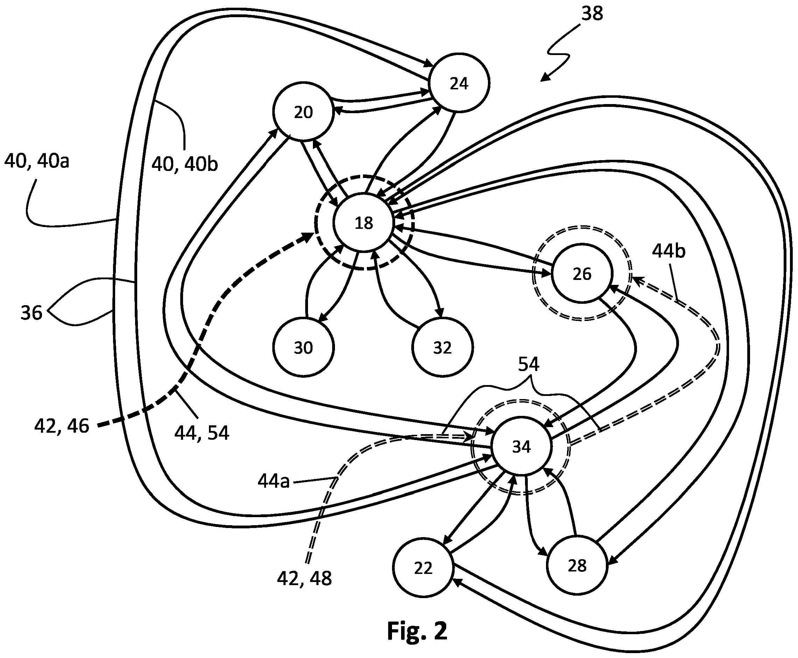

Fig. 2 shows an embodiment of an architecture model 38 of the ECU 10.

The architecture model 38 may be included in and/or extracted from a visual image, a (computer) file, and/or a model database. Each communication link 36 may be configured unidirectional or bidirectional. Each communication link 36 may include one or more linkages 40 for transmitting data. For example, a bidirectional communication link 36 may include a first linkage 40a for transmitting data in one direction and a second linkage 40b for transmitting data in a corresponding opposite direction.

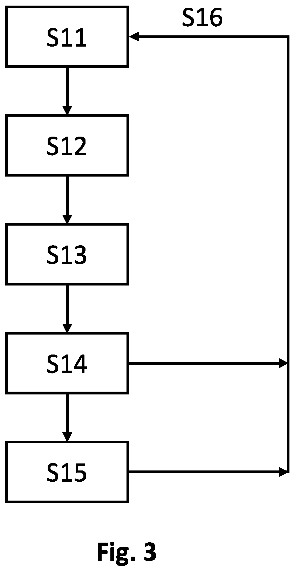

Fig. 3 shows an embodiment of a computer-implemented method for assessing a level of cyber security risks of the electronic control unit 10.

In a step S11, the method includes:
- Automatically determining, for the electronic control unit 10, all of the plurality of components 12 that are vulnerable, each vulnerable component 12 being vulnerable to one or more corresponding potential threats 42, and obtaining each communication link 36 for data communication between said vulnerable components 12 based on the architecture model 38 of the electronic control unit 10.

The automatically determining of all of the plurality of vulnerable components 12 may include an automatically obtaining the architecture model 38 from said visual image, file, and/or model database. In step S11, some of the components 12 of the electronic control unit 10, that are non-vulnerable, may be excluded.

Each potential threat 42 against a vulnerable component 12 may include one, several, or all of the following:
- Consuming component-related resources for generating, storing, and/or processing;
- Removing, manipulating, and/or gathering component-related data;
- Intercepting a component-related data flow;
- Spoofing component-related identity; and/or
- Performing a denial-of-service attack.

Each potential threat 42 may be based on one or more potential attacks 44 against one or more vulnerable components 12. Each potential threat 42 may be direct or indirect. A direct potential threat 46 (example: single-dashed arrow/circle in Fig. 2) may relate to a single attack 44 against the respective vulnerable component 12. An indirect potential threat 48 (example: double-dashed arrows/circles in Fig. 2) may relate to a second potential attack 44b against the respective vulnerable component 12 in connection with a first potential attack 44a against another vulnerable component 12 in data communication with the respective vulnerable component 12.

An indirect potential threat 46 may, however, also relate to more than two potential attacks 44 against more than two vulnerable components 12. For example, an indirect potential threat 48 may relate to a first potential attack 44a against a first vulnerable component 12a followed by a second potential attack 44b against a second vulnerable component 12b in data communication with the first vulnerable component 12a, and again followed by a third potential attack 44c against a third vulnerable component 12c in data communication with the second vulnerable component 12b.

In a step S12, the method includes:
- Determining, for the electronic unit 10, the one or more corresponding potential threats 42 for each vulnerable component 12, one or more potential threat-related damages 50 to each vulnerable component 12 and corresponding impact ratings 52 therefor, and one or more potential threat-related attack paths 54 to each vulnerable component 12 and corresponding attack path feasibilities 56 therefor.

Each potential damage 50 to a vulnerable component 12 may include one, several, or all of the following:
- Unavailability of the component 12 or one or more intended functionalities thereof;
- Manipulation of the component 12;
- Corruption of firmware and/or software of the component 12; and/or
- Data extraction from the component 12.

Each impact rating 52 of a potential damage 50 may be indicative of an impact of said potential damage 50 to the respective vulnerable component 12 relating to the potential threat 42 against the respective vulnerable component 12. The impact rating 52 may be considered with respect to a safety impact, a financial impact, an operational impact, and/or a privacy impact of the potential damage 50 to the vulnerable component 12.

Each potential attack path 54 may relate to a direct potential threat 46 or an indirect potential threat 48 against the respective vulnerable component 12. The attack paths 54 may be determined based on the vulnerable components 12 and the communication links 36 that are determined or obtained, respectively, according to step S11.

Each attack path feasibility 56 of a potential attack path 54 may be indicative of a feasibility of the potential attack path 54 to the respective vulnerable component 12. The attack path feasibility 56 may considered with respect to one, several, or all of the following:
- a time,
- a level of expertise of an attacker,
- an amount or field of knowledge and/or information about the electronic control unit 10,
- a window of opportunity for an attacker, and/or
- an equipment
required for performing the potential threat-related attack path 54.

In a step S13, the method includes:
- Based on step S12, for each potential threat 42 and each potential attack path 54, determining a corresponding risk value 58 based on the impact rating 52 for the threat-related potential damage 50 to the respective vulnerable component 12 and the attack path feasibility 56 for the respective potential threat-related attack path 54.

Each risk value 58 may be based on a product of a level for the attack path feasibility 56 and a level for the impact rating 52.

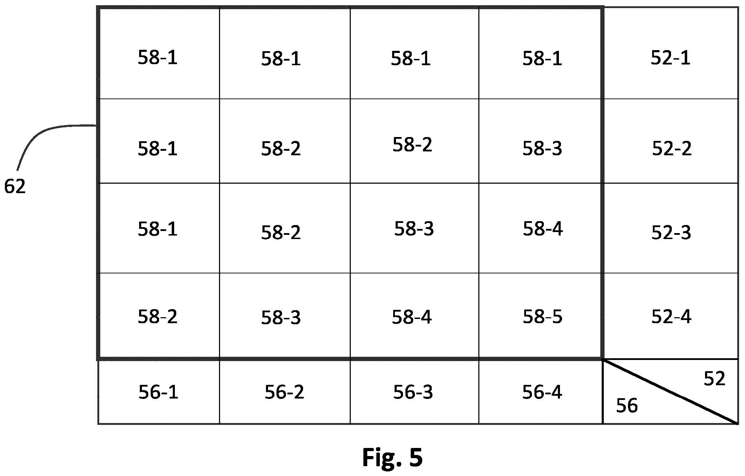

Additionally, or alternatively, each risk value 58 may be based on a risk score matrix 62 for the attack path feasibility 56 and the impact rating 52. For example, the risk score matrix 62 may be a two-dimensional matrix having a plurality of columns and a plurality of rows. For example, the two-dimensional matrix may have four columns representing feasibility levels 56-1 (e.g., "very low"), 56-2 (e.g., "low"), 56-3 (e.g., "medium"), and 56-4 (e.g., "high") as possible attack path feasibility 56 and four rows representing impact levels 52-1 (e.g., "negligible"), 52-2 (e.g., "moderate"), 52-3 (e.g., "major"), and 52-4 (e.g., "severe") as possible impact rating 52. Each entry of the two-dimensional matrix may represent a possible risk value 58. An example of such a risk score matrix 62 is shown in Fig. 5. In this case, the risk score matrix 62 is based on a risk scale including five risk levels 58-1 (e.g., "very low"), 58-2 (e.g., "low"), 58-3 (e.g., "medium"), 58-4 (e.g., "high"), and 58-5 (e.g., "critical") as possible risk value 58.

In a step S14, the method includes:
- Assessing the level of cyber security risks of the electronic control unit 10 based on the one or more risk values 58 determined in step S13.

Step S14 may further comprise one, several, or all of the following:
- Assessing the level of cyber security risks by generating a report on the cyber security of the electronic control unit 10;
- Assessing the level of cyber security risks based on a maximum and/or minimum value of the one or more risk values 58, and/or a mean value of the one or more risk values 58, and/or a standard deviation of the one or more risk values 58;
- Assessing the level of cyber security by comparing the one or more risk values 58 to a standardized list of threats 52 that is mandatory to be considered for an automotive electronic control unit 10; and/or
- Assessing the level of cyber security includes providing a treatment decision on each risk value 58.

A treatment decision on a selected risk value 58 may refer to a pre-defined input and/or requested user input whether (and if yes: preferably how) to consider said risk value 58. For example, the input may be to pay less attention or even to ignore the selected risk value 58. Alternatively, the input may be to pay more attention to the selected risk value 58. The input may further be to skip the selected risk value 58 when performing the method, or alternatively, to abort the method depending on the selected risk value 58. Additionally, or alternatively, the input may refer to a policy, for example, to ignore very low risk values 58. Additionally, or alternatively, the selected risk value 58 may be overwritten, adjusted, and/or fixed by input.

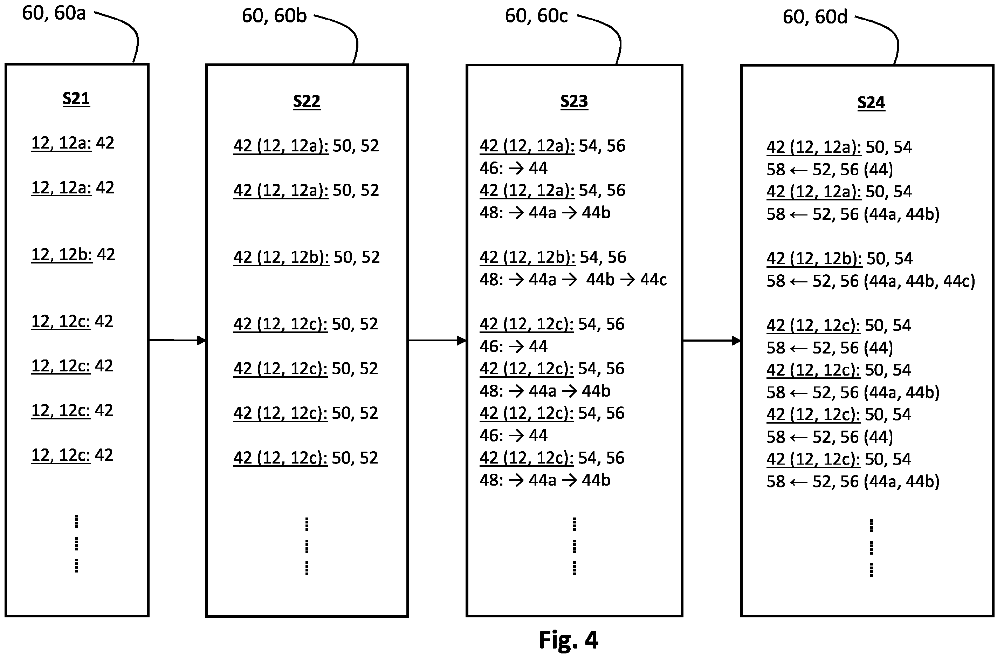

Reference is now made to Fig. 4 shows an implementation of the method according to Fig. 3 in form of a plurality of lists 60. Each list 60 may comprise one or more corresponding entries.

In a step S21, the step S12 may further comprise:
- Generating a first list 60a of the potential threats 42 against each vulnerable component 12.

In a step S22, the step S12 may further comprise:
- Generating a second list 60b of the potential threat-related damages 50 to each vulnerable component 12 and the corresponding impact ratings 52 therefor.

In a step S23, the step S12 may further comprise:
- Generating a third list 60b of the potential threat-related attack paths 54 to each vulnerable component 12 and the corresponding attack path feasibilities 56 therefor.

In a step S23, the step S13 may further comprise:
- For all potential threats 42 from the first list 60a and all potential threat-related attack paths 54 from the third list 60c, generating a fourth list 60d of the risk values 58 based on the impact ratings 52 from the second list 60b for the potential threat-related damages 50 relating to the potential threats 52 and the attack path feasibilities 56 for the potential threat-related attack paths 54.

In a step S24, the step S14 may further comprise:
- Assessing the level of cyber security risks of the electronic control unit 10 based on the fourth list 60d of risk values 58.

Reference made again to Fig. 3.

In a step S15, the method may further comprise:
- Determining potential counter measures based on the assessing, preferably by reducing at least one of the risk values 58 and/or by removing the vulnerability of at least one vulnerable component 12, wherein said potential counter measures preferably include updating and/or changing the architecture model 38 by one, several, or all of the following:
- Removing, replacing, and/or adapting at least one vulnerable component 12;
- Removing, changing, and/or adapting at least one communication link 36 between vulnerable components 12; and/or
- Adding at least one further component 12 and/or communication link 36.

The removing, replacing, and/or adapting of at least one vulnerable component 12 may include to remove, replace, and/or adapt one or more functionalities of the vulnerable component 12. The adding at least one further component 12 may, for example, include to add and/or adapt a firewall. The further component 12 may be vulnerable or non-vulnerable.

In a step S16, the method may further comprise the repetition of the steps S11 to S14 (or S11 to S15) when the architecture model 38 is updated and/or changed.

The architecture model 38 may be updated and/or changed, for example, according to step S15. The method may be repeated, when a pre-defined requirement for the level of cyber security risks of the ECU 10 is not satisfied after the assessment. The method may be repeated or iterated according to step S16 one or several times until said requirement is fulfilled or a pre-defined maximum number of repetitions or iterations is reached.

Step S16 may further include to repeat or iterate the method by comparing the assessment of a current architecture model 38 with the assessment of a previous architecture model 38.

For example, if the current assessment does not change with respect to the previous assessment after one or more repetitions or iterations, the method may stop before the pre-defined maximum number of repetitions or iterations is reached. Additionally, or alternatively, if the current assessment changes significantly (i.e., in a positive or negative direction with respect to the level of cyber security risks), a further repetition or iteration may accept or revert the updates and/or changes of the architecture model 38.

Additionally, or alternatively, comparing the assessment may include highlighting or separating differences between the current assessment and the previous assessment. Such differences may, for example, be presented in a distinct user-friendly way.

In steps S11 to S14, the one or more potential threats 42, the one or more potential (threat-related) damages 50, the one or more impact ratings 52, the one or more potential (threat-related) attack paths 54, the one or more attack path feasibilities 56, the one or more risk values 58, and/or the one or more potential attacks 44 may be mapped to the ECU 10 and/or the vulnerable components 12 thereof based on information about a plurality of ECUs 10 (and/or architecture models 38) and corresponding assessments (and/or reports). For example, information about the plurality of ECUs 10 and assessments may be created and/or collected in a database.

Alternatively, or additionally, the database may include a set of rules and the one or more potential threats 42, the one or more potential (threat-related) damages 50 and corresponding impact ratings 52 therefor, the one or more potential (threat-related) attack paths 54 and corresponding attack path feasibilities 56 therefor, and/or the one or more potential attacks 44 are automatically selected for or to each vulnerable component 12, respectively, based on said set of rules.

Alternatively, or additionally, a machine learning model may be trained with said information, set of rules, and/or database. The one or more potential threats 42, the one or more potential (threat-related) damages 50, the one or more impact ratings 52, the one or more potential (threat-related) attack paths 54, the one or more attack path feasibilities 56, the one or more risk values 58, and/or the one or more potential attacks 44 may be mapped to the ECU 10 and/or the vulnerable components 12 thereof by means of said machine learning model.

Embodiments also include the ECU 10 that is and/or can be assembled with a composition that is determined and/or determinable by means of the assessment of the level of cyber security risks thereof based on the computer-implemented method according to Fig. 3.

The composition of the ECU 10 preferably is based on an architecture model 38 that is assessed by means of the computer-implemented method according to Fig. 3. For instance, the method may automatically define one or more components 12 from which the ECU 10 should be composed of according to cyber security needs. Furthermore, the method may automatically define one or more communication links 36 for data communication between components 12 according to cyber security needs. The composition of the ECU 10 may be determined and/or is determinable before assembly of the ECU 10. Additionally, or alternatively, the level of cyber security risks of an existing ECU 10 can be assessed by the method and the method may suggest one or more counter measures according to step S15 for improving the cyber security.

### REFERENCE SIGNS

10 electronic control unit (ECU)
12 (vulnerable) component
12a first component
12b second component
12c third component
14 hardware component
16 software component
18 microcontroller unit
20 memory device
22 sensor device
24 operating system
26 device driver
28 Joint Test Action Group (JTAG) driver
30 analog-to-digital converter device
32 integrated and/or regular circuit device
34 input and/or output interface component
36 communication link
38 architecture model
40 linkage
40a first linkage
40b second linkage
42 potential threat
44 potential attack
44a first potential attack
44b second potential attack
44c third potential attack
46 direct potential threat
48 indirect potential threat
50 potential damage
52 impact rating
52-1, 52-2, 52-3, 52-4 impact level
54 potential attack path
56 attack path feasibility
56-1, 56-2, 56-3, 56-4 feasibility level
58 risk value
58-1, 58-2, 58-3, 58-4, 58-5 risk level
60 list
60a first list
60b second list
60c third list
60d fourth list
62 risk score matrix

## Claims

1. A computer-implemented method for assessing a level of cyber security risks of an electronic control unit (10), the electronic control unit (10) including a plurality of components (12) for generating, storing, and/or processing data, the method comprising:
a) Automatically determining, for the electronic control unit (10), all of the plurality of components (12) that are vulnerable, each vulnerable component (12) being vulnerable to one or more corresponding potential threats (42), and obtaining each communication link (36) for data communication between said vulnerable components (12) based on an architecture model (38) of the electronic control unit (10);
b) Determining, for the electronic unit (10), the one or more corresponding potential threats (42) for each vulnerable component (12), one or more potential damages (50) to each vulnerable component (12) and corresponding impact ratings (52) therefor, and one or more potential attack paths (54) to each vulnerable component (12) and corresponding attack path feasibilities (56) therefor;
c) Based on step b), for each potential threat (42) and each potential attack path (54), determining a corresponding risk value (58) based on the impact rating (52) for the potential damage (50) to the respective vulnerable component (12) and the attack path feasibility (56) for the respective potential attack path (54); and
d) Assessing the level of cyber security risks of the electronic control unit (10) based on the one or more risk values (58) determined in step c).

2. The method according to claim 1, **characterized in that**:
- each potential threat (42) is based on one or more potential attacks (44) against one or more vulnerable components (12); and/or
- each potential attack path (54) relates to a direct potential threat (46) or an indirect potential threat (48) against the respective vulnerable component (12), wherein an indirect potential threat (48) preferably relates a second potential attack (44b) against the respective vulnerable component (12) in connection with a first potential attack (44a) against a vulnerable component (12) in data communication with the respective vulnerable component (12).

3. The method according to any of the preceding claims, further comprising:
f) Determining potential counter measures based on the assessing, preferably by reducing at least one of the risk values (58) and/or by removing the vulnerability of at least one vulnerable component (12), wherein said potential counter measures preferably include updating and/or changing the architecture model (38) by one, several, or all of the following:
- Removing, replacing, and/or adapting at least one vulnerable component (12);
- Removing, changing, and/or adapting at least one communication link (36) between vulnerable components (12); and/or
- Adding at least one further component (12) and/or communication link (36).

4. The method according to any of the preceding claims, **characterized in that** step d) further comprises one, several, or all of the following:
d2) Assessing the level of cyber security risks by generating a report on the cyber security of the electronic control unit (10);
d3) Assessing the level of cyber security risks based on a maximum and/or minimum value of the one or more risk values (58), and/or a mean value of the one or more risk values (58), and/or a standard deviation of the one or more risk values (58);
d4) Assessing the level of cyber security by comparing the one or more risk values (58) to a standardized list of threats (42) that is mandatory to be considered for an automotive electronic control unit (10); and/or
d5) Assessing the level of cyber security includes providing a treatment decision on each risk value (58).

5. The method according to any of the preceding claims, **characterized in that** one, several, or all of the steps of the method are repeated when the architecture model (38) of the electronic control unit (10) is updated and/or changed, and preferably the repetition includes comparing the assessment of a current architecture model (38) with the assessment of a previous architecture model (38).

6. The method according to any of the preceding claims, **characterized in that** the plurality of components (12) includes an input and/or output interface component (34) of the electronic control unit (10).

7. The method according to any of the preceding claims, **characterized in that**:
7.1 the one or more potential threats (42), the one or more potential damages (50) and corresponding impact ratings (52) therefor, the one or more potential attack paths (54) and corresponding attack path feasibilities (56) therefor, the one or more risk values (58), and/or one or more potential attacks (44) are mapped to the electronic control unit (10) and/or the vulnerable components (12) thereof based on information about a plurality of architecture models (38) and corresponding assessments and/or reports, and/or are mapped by means of a machine learning model trained with said information; and/or
7.2 the one or more potential threats (42), the one or more potential damages (50) and corresponding impact ratings (52) therefor, the one or more attack paths (54) and corresponding attack path feasibilities (56) therefor, and/or one or more potential attacks (44) are automatically selected for or to each vulnerable component, respectively, based on a set of rules that is included in a database.

8. The method according to any of the preceding claims, **characterized in that** the potential threat (42) against the vulnerable component (12) includes one, several, or all of the following:
- Consuming component-related resources for generating, storing, and/or processing;
- Removing, manipulating, and/or gathering component-related data;
- Intercepting a component-related data flow;
- Spoofing component-related identity; and/or
- Performing a denial-of-service attack.

9. The method according to any of the preceding claims, **characterized in that** the potential damage (50) to the vulnerable component (12) includes one, several, or all of the following:
- Unavailability of the component (12) or one or more intended functionalities thereof;
- Manipulation of the component (12);
- Corruption of firmware and/or software of the component (12); and/or
- Data extraction from the component (12).

10. The method according to any of the preceding claims, **characterized in that**:
10.1 the impact rating (52) is considered with respect to a safety impact, a financial impact, an operational impact, and/or a privacy impact of the potential damage to the vulnerable component; and/or
10.2 the attack path feasibility (56) is considered with respect to one, several, or all of the following:
- a time,
- a level of expertise of an attacker,
- an amount or field of knowledge and/or information about the electronic control unit (10),
- a window of opportunity for an attacker, and/or
- an equipment
required for performing the potential attack path (54).

11. The method according to any of the preceding claims, **characterized in that** the risk value (58) is based on a product of a level for the attack path feasibility (56) and a level for the impact rating (52), and/or **in that** the risk value (58) is based on a risk score matrix (62) for the attack path feasibility (56) and the impact rating (52).

12. A computing device comprising means adapted to execute the steps of the method according to any of the preceding claims.

13. A computer program comprising instructions to cause a computing device to execute the steps of the method according to any of the claims 1 to 11.

14. A computer-readable storage medium having stored thereon the computer program of claim 13.

15. An electronic control unit (10), preferably for operating a vehicle and/or an in-vehicle device, the electronic control unit (10) being composable and/or composed with a composition that is determined and/or determinable by means of an assessment of a level of cyber security risks thereof based on the computer-implemented method according to any of the claims 1 to 11.
